(19) Europäisches Patentamt

European Patent Office

Office européen des brevets

(11) Veröffentlichungsnummer: **0 503 026 B1**

(12) **EUROPÄISCHE PATENTSCHRIFT**

(45) Veröffentlichungstag der Patentschrift: **04.01.95**

(51) Int. Cl.⁶: **B60T 8/00**

(21) Anmeldenummer: **91916578.7**

(22) Anmeldetag: **26.09.91**

(86) Internationale Anmeldenummer:
**PCT/EP91/01841**

(87) Internationale Veröffentlichungsnummer:
**WO 92/05987 (16.04.92 92/09)**

(54) **VERFAHREN ZUM BESTIMMEN DER SCHRÄGLAUFWINKEL UND/ODER DER SEITENFÜHRUNGSKRÄFTE EINES GEBREMSTEN FAHRZEUGS.**

(30) Priorität: **28.09.90 DE 4030653**

(43) Veröffentlichungstag der Anmeldung:
**16.09.92 Patentblatt 92/38**

(45) Bekanntmachung des Hinweises auf die
Patenterteilung:
**04.01.95 Patentblatt 95/01**

(84) Benannte Vertragsstaaten:
**DE FR GB SE**

(56) Entgegenhaltungen:
**EP-A- 0 152 602**
**WO-A-90/06251**
**DE-A- 3 923 599**
**DE-A- 3 935 588**

(73) Patentinhaber: **ROBERT BOSCH GMBH**
**Postfach 30 02 20**
**D-70442 Stuttgart (DE)**

(72) Erfinder: **EHRET, Thomas**
**Hindenburgstr. 33**
**D-7633 Seelbach (DE)**
Erfinder: **HARTMANN, Uwe**
**Olgastr. 79**
**D-7000 Stuttgart 1 (DE)**
Erfinder: **LUTZ, Albert**
**Tulpenstr. 8**
**D-7142 Marbach/Neckar (DE)**

(74) Vertreter: **Kammer, Arno, Dipl.-Ing.**
**ROBERT BOSCH GmbH**
**Zentralabteilung Patente**
**Postfach 30 02 20**
**D-70442 Stuttgart (DE)**

**Beschreibung**

Stand der Technik

Die Schräglaufwinkel der Räder oder der Achsen eines gebremsten Kraftfahrzeuges sind für die Fahrdynamikregelung eines Kraftfahrzeuges wichtige Größen. Dies gilt auch für die Seitenführungskräfte an den einzelnen Rädern. Beide Größen lassen sich nur schwierig direkt messen oder bestimmen.

Aus der WO 90/06251 ist es bekannt, die Schräglaufwinkel eines Fahrzeugs zur Erhöhung der Beherrschbarkeit eines Fahrzeugs zu benutzen.

In dieser Schrift ist auch ein Verfahren zur Bestimmung der Schräglaufwinkel beschrieben, wobei dort ebenfalls die Meßgrößen Längsgeschwindigkeit, Giergeschwindigkeit und Lenkwinkel genutzt werden. Zusätzlich wird dort noch die Quergeschwindigkeit genutzt.

Vorteile der Erfindung

Die Erfindung schlägt eine Schätzung dieser Größen vor, wobei in die Schätzung Meßgrößen einbezogen werden, die bei der Fahrdynamikregelung sowieso benötigt und deshalb gemessen werden.

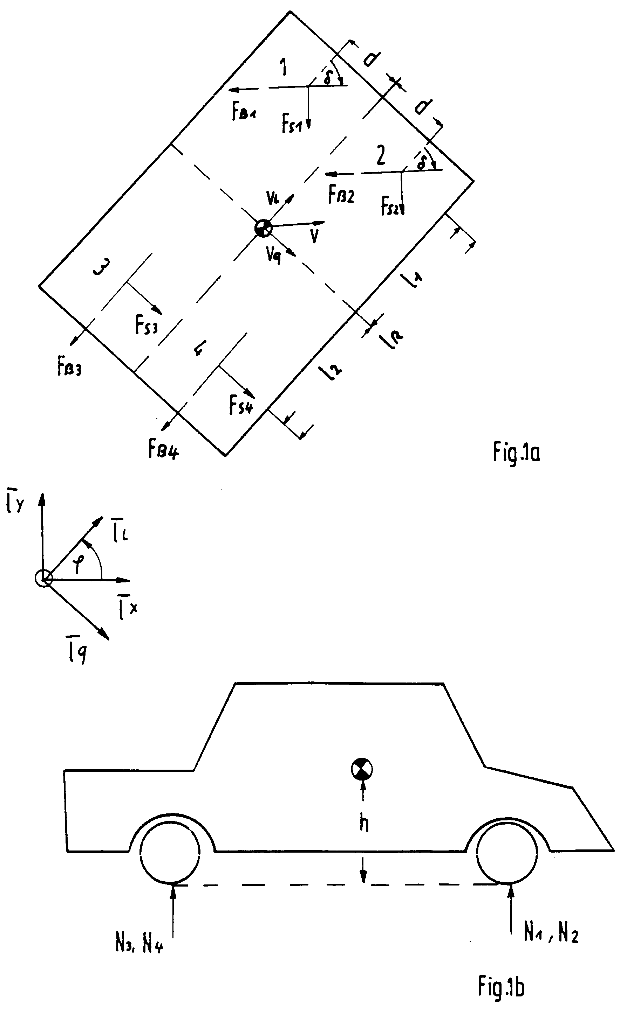

Ausgangspunkt der weiteren Betrachtungen ist das in Fig. 1a und 1b skizzierte einfache Fahrzeugmodell, bei dem Nicken, Wanken und die Hubbewegung nicht berücksichtigt werden. Mit diesen Vereinfachungen liefern Impuls- und Drallsatz folgende Gleichungen:

Impulssatz:

$$m(\dot{V}_L + V_q \dot{\psi}) = - (F_{SV}\sin\delta + F_{BV}\cos\delta + F_{BH}) \tag{1.1}$$

$$m(V_q - V_L\dot{\phi}) = F_{SV}\cos\delta - F_{BV}\sin\delta + F_{SH} \tag{1.2}$$

$$N_1 + N_2 + N_3 + N_4 - mg = 0 \tag{1.3}$$

Drallsatz:

$$[F_{BV}l_1 + (F_{S1} - F_{S2})d]\sin\delta - [(F_{B1} - F_{B2})d - F_{SV}\,l_1]\cos\delta \tag{1.4}$$

$$+ F_{SH}l_2 + (F_{B3} - F_{B4})d = \theta_H\ddot{\psi}$$

$$(N_1 + N_3 - N_2 - N_4)d - F_{SV}\cos\delta \cdot h - F_{SH}.h + F_{BV}\sin\delta \cdot h = 0 \tag{1.5}$$

$$(N_1 + N_2)l_1 - (N_3 + N_4)l_2 - F_{BV}\cos\delta \cdot h - F_{BH}.h - F_{SV}\sin\delta \cdot h = 0 \tag{1.6}$$

mit

$$F_{SV} = F_{S1} + F_{S2}$$
$$F_{SH} = F_{S3} + F_{S4}$$
$$F_{BV} = F_{B1} + F_{B2}$$
$$F_{BH} = F_{B3} + F_{B4}.$$

Hierin bedeuten

m : Fahrzeugmasse
$\theta_H$ : Trägheitsmoment um Hochachse
g : Erdbeschleunigung

EP 0 503 026 B1

$V_L$ :    Fahrzeuglängsgeschwindigkeit

$V_q$ :    Fahrzeugquergeschwindigkeit im Schwerpunkt

$\dot{\phi}$ :    Giergeschwindigkeit um die Hochachse

$F_{Si}$ :    Seitenführungskraft des i. Rads

$F_{Bi}$ :    Bremskraft des i. Rads

$\delta$ :    Lenkwinkel

$N_i$ :    Aufstandskraft des i. Rads

$l_1, l_2$ :    Achsabstände vom Schwerpunkt

d :    Radabstand von der Längsachse

h :    Höhe des Schwerpunkts

Zur eindeutigen Bestimmung der Aufstandskräfte $N_1$, ..., $N_4$ ist neben den Gln. (1.3), (1.5) und (1.6) eine weitere Beziehung erforderlich, die durch Berücksichtigung der Fahrzeugeinfederung gewonnen wird. Für kleine Einfederungen $X_1$, ..., $X_4$ gilt:

$$X_1 + X_4 = X_2 + X_3 \qquad (1.7)$$

Setzt man die Federkonstanten der Radaufhängungen als gleich voraus, ergibt sich:

$$N_1 + N_4 = N_2 + N_3 \qquad (1.8)$$

Im stationären Zustand gilt für die Momente um die Lenkachse, die vereinfachend senkrecht zur Zeichenebene stehend angenommen wird:

$$F_S (n_R + n_K) - F_B r_S - C_{AS} \delta_E = 0 \qquad (2.1)$$

Die Seitenführungskraft und Bremskraft berechnet sich gemäß dem HSRI-Reifenmodell zu:

$$F_S = \frac{C_\alpha}{1-\lambda} \left( \frac{1}{H} - \frac{1}{4H^2} \right) \tan\alpha \qquad (2.2)$$

$$F_B = \frac{C_\lambda \cdot \lambda}{1-\lambda} \left( \frac{1}{H} - \frac{1}{4H^2} \right) \qquad (2.3)$$

Hierin bedeuten:

$r_S$ :    Lenkrollradius

$n_K$ :    Kinematischer Nachlauf

$n_R$ :    Reifennachlauf

$\delta$ :    Lenkwinkel

$\delta_E$ :    Elastischer Lenkwinkel

$\beta$ :    Schwimmwinkel

$\alpha$ :    Schräglaufwinkel

$\overline{V}_S$ :    Schwerpunktsgeschwindigkeit des Rades

$C_{AS}$ :    Resultierende Achs- und Lenkungssteifigkeit

und

$$H = \sqrt{ \left( \frac{C_\lambda \cdot \lambda}{\mu \cdot N(1-\lambda)} \right)^2 + \left( \frac{C_\alpha \cdot \tan\alpha}{\mu \, N(1-\lambda)} \right)^2 }$$

3

Aus (2.2) und (2.3) folgt:

$$\frac{F_S}{F_B} = \frac{C_\alpha}{C_\lambda} \; \frac{\tan\alpha}{\lambda} \qquad\qquad (2.4)$$

$C_\alpha$ :      Schräglaufsteifigkeit des Reifens
$C_\lambda$ :      Längssteifigkeit des Reifens
$\lambda$ :      Reifenschlupf
$\mu$ :      Reibbeiwert
$N$ :      Aufstandskraft

Mit der Näherung $\tan\alpha \approx \alpha$ folgt aus (2.4)

$$F_S = \frac{C_\alpha}{C_\lambda} \; \frac{F_B}{\lambda} \; \alpha \qquad\qquad (2.5)$$

oder mit

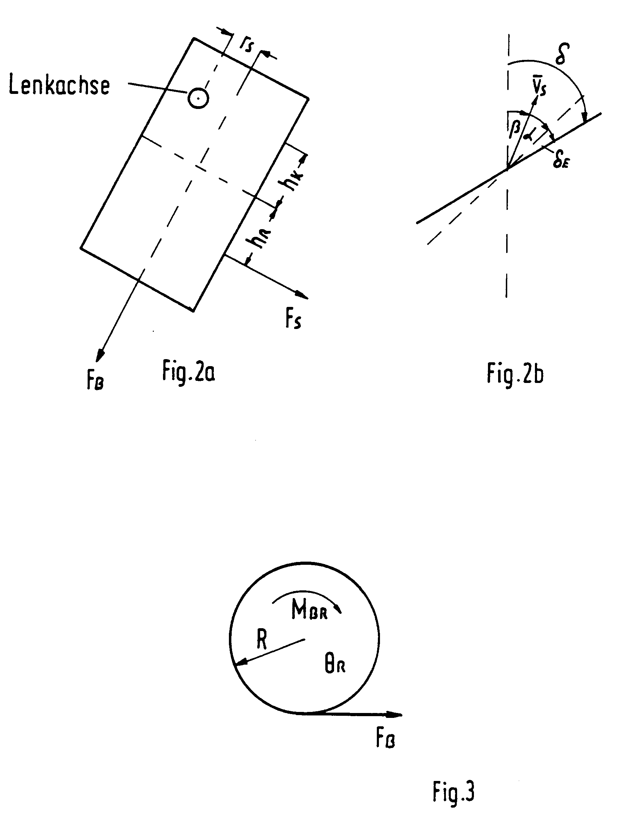

$$\alpha = \delta - \beta - \delta_E \text{ entspr. Fig. 2b} \qquad (2.6)$$

$$F_S = \frac{C_\alpha}{C_\lambda} \; \frac{F_B}{\lambda} \; (\delta - \beta - \delta_E) \qquad\qquad (2.7)$$

Aus (2.1) und (2.7) folgt:

$$\delta_E = \frac{\dfrac{C_\alpha}{C_\lambda} \dfrac{F_B}{\lambda} l_E}{C_{AS} + \dfrac{C_\alpha}{C_\lambda} \dfrac{F_B}{\lambda} l_E} (\delta - \beta) - \frac{F_B \, r_S}{C_{AS} + \dfrac{C_\alpha}{C_\lambda} \dfrac{F_B}{\lambda} l_E} \qquad\qquad (2.8)$$

$$F_S = \frac{C_{AS} \dfrac{C_\alpha}{C_\lambda} \dfrac{F_B}{\lambda}}{C_{AS} + \dfrac{C_\alpha}{C_\lambda} \dfrac{F_B}{\lambda} l_E} (\delta - \beta) + \frac{\dfrac{C_\alpha}{C_\lambda} \dfrac{F_B{}^2}{\lambda} r_S}{C_{AS} + \dfrac{C_\alpha}{C_\lambda} \dfrac{F_B}{\lambda} l_E} \qquad\qquad (2.9)$$

mit $l_E = n_R + n_K$.

Ausgehend von den Basisgleichungen (2.6), (2.8) und (2.9) ergeben sich die elastischen Lenkwinkel, die Schräglaufwinkel und die Seitenführungskräfte der vier Räder zu:

$$\delta_{E1} = \frac{\dfrac{C_\alpha}{C_\lambda} \dfrac{F_{B1}}{\lambda_1} l_{EV}}{C_{AS} + \dfrac{C_\alpha}{C_\lambda} \dfrac{F_{B1}}{\lambda_1} l_{EV}} (\delta - \beta_V) - \frac{F_{B1} r_{SV}}{C_{AS} + \dfrac{C_\alpha}{C_\lambda} \dfrac{F_{B1}}{\lambda_1} l_{EV}} \qquad (2.10)$$

$$\delta_{E2} = \frac{\dfrac{C_\alpha}{C_\lambda} \dfrac{F_{B2}}{\lambda_2} l_{EV}}{C_{AS} + \dfrac{C_\alpha}{C_\lambda} \dfrac{F_{B2}}{\lambda_2} l_{EV}} (\delta - \beta_V) + \frac{F_{B2} r_{SV}}{C_{AS} + \dfrac{C_\alpha}{C_\lambda} \dfrac{F_{B2}}{\lambda_2} l_{EV}} \qquad (2.11)$$

$$\delta_{E3} = \frac{\dfrac{C_\alpha}{C_\lambda} \dfrac{F_{B3}}{\lambda_3} l_{EH}}{C_A + \dfrac{C_\alpha}{C_\lambda} \dfrac{F_{B3}}{\lambda_3} l_{EH}} \beta_H - \frac{F_{B3} r_{SH}}{C_A + \dfrac{C_\alpha}{C_\lambda} \dfrac{F_{B3}}{\lambda_3} l_{EH}} \qquad (2.12)$$

$$\delta_{E4} = \frac{\dfrac{C_\alpha}{C_\lambda} \dfrac{F_{B4}}{\lambda_4} l_{EH}}{C_A + \dfrac{C_\alpha}{C_\lambda} \dfrac{F_{B4}}{\lambda_4} l_{EH}} \beta_H + \frac{F_{B4} r_{SH}}{C_A + \dfrac{C_\alpha}{C_\lambda} \dfrac{F_{B4}}{\lambda_4} l_{EH}} \qquad (2.13)$$

$$\alpha_1 = \delta - \beta_V - \delta_{E1} \qquad (2.14)$$

$$\alpha_2 = \delta - \beta_V - \delta_{E2} \qquad (2.15)$$

$$\alpha_3 = \beta_H - \delta_{E3} \qquad (2.16)$$

$$\alpha_4 = \beta_H - \delta_{E4} \qquad (2.17)$$

$$F_{S1} = c_{V_1} (\delta - \beta_V) + u_1 \qquad (2.18)$$

$$F_{S2} = c_{V_2} (\delta - \beta_V) + u_2 \qquad (2.19)$$

$$F_{S3} = c_{V_3} \beta_H + u_3 \qquad (2.20)$$

$$F_{S4} = c_{V_4} \beta_H + u_4 \qquad (2.21)$$

Hierin sind folgende Abkürzungen verwendet:

$$c_{V_1} = \frac{c_{AS} \dfrac{c_\alpha}{c_\lambda} \dfrac{F_{B1}}{\lambda_1}}{c_{AS} + \dfrac{c_\alpha}{c_\lambda} \dfrac{F_{B1}}{\lambda_1} l_{EV}} \quad ; \quad u_1 = \frac{\dfrac{c_\alpha}{c_\lambda} \dfrac{F_{B1}^2}{\lambda_1} r_{SV}}{c_{AS} + \dfrac{c_\alpha}{c_\lambda} \dfrac{F_{B1}}{\lambda_1} l_{EV}} \qquad (2.22)$$

$$c_{V_2} = \frac{c_{AS} \dfrac{c_\alpha}{c_\lambda} \dfrac{F_{B2}}{\lambda_2}}{c_{AS} + \dfrac{c_\alpha}{c_\lambda} \dfrac{F_{B2}}{\lambda_2} l_{EV}} \quad ; \quad u_2 = \frac{\dfrac{c_\alpha}{c_\lambda} \dfrac{F_{B2}^2}{\lambda_2} r_{SV}}{c_{AS} + \dfrac{c_\alpha}{c_\lambda} \dfrac{F_{B2}}{\lambda_2} l_{EV}} \qquad (2.23)$$

$$c_{V_3} = \frac{c_A \dfrac{c_\alpha}{c_\lambda} \dfrac{F_{B3}}{\lambda_3}}{c_A + \dfrac{c_\alpha}{c_\lambda} \dfrac{F_{B3}}{\lambda_3} l_{EH}} \quad ; \quad u_3 = \frac{\dfrac{c_\alpha}{c_\lambda} \dfrac{F_{B3}^2}{\lambda_3} r_{SH}}{c_A + \dfrac{c_\alpha}{c_\lambda} \dfrac{F_{B3}}{\lambda_3} l_{EH}} \qquad (2.24)$$

$$c_{V_4} = \frac{c_A \dfrac{c_\alpha}{c_\lambda} \dfrac{F_{B4}}{\lambda_4}}{c_A + \dfrac{c_\alpha}{c_\lambda} \dfrac{F_{B4}}{\lambda_4} l_{EH}} \quad ; \quad u_4 = \frac{\dfrac{c_\alpha}{c_\lambda} \dfrac{F_{B4}^2}{\lambda_4} r_{SH}}{c_A + \dfrac{c_\alpha}{c_\lambda} \dfrac{F_{B4}}{\lambda_4} l_{EH}} \qquad (2.25)$$

Außerdem kann man setzen:

$$\beta_V \approx \frac{v_q - l_1 \dot{\psi}}{v_L} \qquad ; \qquad \beta_H \approx - \frac{v_q + l_2 \dot{\psi}}{v_L} \qquad (2.26)$$

$$\lambda_1 \approx \frac{v_L \cos\delta - v_{R1}}{v_L \cos\delta} \qquad ; \qquad \lambda_2 \approx \frac{v_L \cos\delta - v_{R2}}{v_L \cos\delta} \qquad (2.27)$$

$$\lambda_3 \approx \frac{v_L - v_{R3}}{v_L} \qquad ; \qquad \lambda_4 \approx \frac{v_L - v_{R4}}{v_L} \qquad (2.28)$$

Hierin bedeuten:

$l_{EV}$ :     $(n_R + n_K)$ Vorderachse

$l_{EH}$ :     $(n_R + n_K)$ Hinderachse

$v_{Ri}$ :     Radgeschwindigkeiten

$c_{AS}$ :     resultierende Achs- und Lenksteifigkeit Vorderachse

$r_{SV}$ :     Lenkrollradius an der Vorderachse

$C_A$ :     resultierende Achssteifigkeit Hinterachse

$r_{SH}$ :     Lenkrollradius an der Hinterachse

In diesen Beziehungen sind die Fahrzeuglängsgeschwindigkeit $V_L$, die Fahrzeugquergeschwindigkeit $V_q$ und die Bremskräfte $F_{Bi}$ noch zu bestimmende Größen, während der Lenkwinkel $\delta$, die Giergeschwindigkeit $\dot{\phi}$, die Radgeschwindigkeiten $V_{Ri}$ Meßgrößen sind. Alles andere sind Konstanten.

Die Anwendung des Drallsatzes entsprechend Fig. 3 liefert die Beziehung:

$$\theta_R \frac{\dot{V}_R}{R} = F_B\ R\ -\ M_{BR} \tag{3.1}$$

mit

$$M_{BR} = C_P\ P_R \text{ und} \tag{3.2}$$

$\theta_R$ :     Radträgheitsmoment
$C_P$ :     Bremsmomentübersetzung
$P_R$ :     Radbremszylinderdruck
$M_{BR}$ :     Bremsmoment
$R$ :     Radius des Rads

Damit ergibt sich die Bremskraft des i-ten Rades zu:

$$F_{Bi} = \frac{\theta_R}{R^2}\ \dot{V}_{Ri} + \frac{C_{Pi}}{R}\ P_{Ri}\ \ ;\ \ i = 1,\ \ldots,\ 4 \tag{3.3}$$

Die Radbremszylinderdrücke können in bekannter Weise aus dem gemessenen Vordruck (Hauptbremszylinderdruck) in Verbindung mit einem Hydraulikmodell abgeschätzt werden oder direkt gemessen werden.

Die Fahrzeuglängsgeschwindigkeit wird aus den Radsignalen und der geschätzten Fahrzeugverzögerung:

$$a_L \approx -\frac{1}{m} \sum_{i=1}^{4} F_{Bi} \tag{3.4}$$

gewonnen.

Das Einsetzen der Gln. (2.18) - (2.21) in die Gln. (1.2) und (1.4) liefert die Beziehungen:

$$m(\dot{V}_q - V_L \dot{\psi}) = C_V\ \cos\delta(\delta-\beta_V)\ +\ C_H\ \beta_H\ +\ u_5 \tag{4.1}$$

$$\theta_H \ddot{\psi} = -[C_V l_1 \cos\delta - (C_{V_1} - C_{V_2})d\ \sin\delta](\delta-\beta_V)\ +\ C_H\ l_2\ \beta_H\ +\ u_6 \tag{4.2}$$

mit

$u_5 = \cos\delta(u_1 + u_2) + u_3 + u_4 - F_{VB}\sin\delta$
$u_6 = F_{BV}l_1\sin\delta + (F_{B1} - F_{B2})d\ \cos\delta + (F_{B3} - F_{B4})d +$
$(u_1 - u_2)d\ \sin\delta - (u_1 + u_2)\ l_1\cos\delta + l_2\ (u_3\ +\ u_4)$

7

$$c_V = c_{V_1} + c_{V_2}$$

$$c_H = c_{V_3} + c_{V_4}$$

Das Einsetzen von (2.26) in (4.1) und (4.2) ergibt schließlich das Differentialgleichungssystems:

$$\dot{V}_q = A_{11} V_q + A_{12} \dot{\psi} + \tilde{u}_1 \qquad\qquad (4.3)$$

$$\ddot{\psi} = A_{21} V_q + A_{22} \dot{\psi} + \tilde{u}_2 \qquad\qquad (4.4)$$

mit

$$A_{11} = - \frac{(c_V \cos\delta + c_H)}{m V_L}$$

$$A_{12} = \frac{c_V l_1 \cos\delta - c_H l_2 + m V_L{}^2}{m V_L}$$

$$A_{21} = \frac{c_V l_1 \cos\delta - c_H l_2 - (c_{V_1} - c_{V_2}) d \sin\delta}{\Theta_H V_L}$$

$$A_{22} = - \frac{[c_V l_1{}^2 \cos\delta + c_H l_2{}^2 - (c_{V_1} - c_{V_2}) d \sin\delta\, l_1]}{\Theta_H V_L}$$

$$\tilde{u}_1 = \frac{u_5 + c_V \cos\delta\, \delta}{m}$$

$$\tilde{u}_2 = \frac{u_6 - [c_V l_1 \cos\delta - (c_{V_1} - c_{V_2}) d \sin\delta]\delta}{\Theta_H}$$

Die Gln. (4.3) und (4.4) stellen ein einfaches, lineares zeitvariantes Fahrzeugmodell dar.

Führt man die Zustandsgrößen $X_1 = V_q$ und $X_2 = \dot{\phi}$ ein und ersetzt $X_{iK}$ durch die Näherung

$$\dot{X}_{iK} \approx \frac{X_{iK+1} - X_{iK}}{T} \quad ; \quad i = 1,2$$

T :       Abtastzeit,

so ergibt sich das diskrete Zustandsraummodell:

$$\underline{X}_{K+1} = \underline{\Psi}_K \, \underline{X}_K + \underline{\hat{u}}_K \tag{4.5}$$

mit

$$\underline{\Psi}_K = \begin{bmatrix} \Psi_{11} & \Psi_{12} \\ \\ \Psi_{21} & \Psi_{22} \end{bmatrix}_K = \begin{bmatrix} A_{11}T + 1 & A_{12}T \\ \\ A_{21}T & A_{22}T + 1 \end{bmatrix}_K$$

$$\underline{\hat{\mu}}_K = \begin{bmatrix} \hat{\mu}_1 \\ \\ \hat{\mu}_2 \end{bmatrix}_K = \begin{bmatrix} T \cdot \tilde{u}_1 \\ \\ T \cdot \tilde{u}_2 \end{bmatrix}_K$$

Da $\dot{\phi}$ gemessen wird, läßt sich das Modell (4.5) auf Ordnung eins reduzieren.
Es gilt:

$$X_{1K+1} = \Psi_{11K} \, X_{1K} + u_K^* \tag{4.6}$$

$$Y_K = \Psi_{21K} \, X_{1K}$$

mit

$$Y_K = \dot{\phi}_K \, (2 - \Psi_{22K}) - \dot{\phi}_{K-1} - \hat{u}_{2K}$$
$$u_K^* = \Psi_{12K} \dot{\phi}_K + \hat{u}_{1K}$$

Berücksichtigt man das Zustandsrauschen $V_K$ und das Meßrauschen $W_K$, so ergibt sich aus (4.6) das stochastisch gestörte System:

$$X_{1K+1} = \Psi_{11K} \, X_{1K} + u_K^* + V_K \tag{4.7}$$

$$Y_K = \Psi_{21K} \, \Psi_{1K} + W_K$$

Aus dem Modell (4.7) wird nun mittels eines Kalman-Filters ein Schätzwert $\hat{X}_{1K} = \hat{V}_{qK}$ gewonnen. Für die geschätzten Schwimmwinkel gilt dann:

$$\hat{\beta}_V = \frac{\hat{V}_q - l_1 \dot{\boldsymbol{\mathcal{Y}}}}{v_L} \quad ; \quad \hat{\beta}_H = - \frac{\hat{V}_q + l_2 \dot{\boldsymbol{\mathcal{Y}}}}{v_L} \tag{4.8}$$

Damit sind die Schräglaufwinkel und die Seitenführungskräfte der vier Räder gemäß den Gln. (2.14) - (2.21) ermittelbar.
Die mittleren Schräglaufwinkel an der Vorder- und an der Hinterachse, die für den Fahrzeugregler benötigt werden, ergeben sich zu:

$$\hat{\alpha}_V = \frac{\hat{\alpha}_1 + \hat{\alpha}_2}{2} \quad ; \quad \hat{\alpha}_H = \frac{\hat{\alpha}_3 + \hat{\alpha}_4}{2} \tag{4.9}$$

Entscheidend für die Qualität der Schätzung der Fahrzeugquergeschwindigkeit $\hat{V}_q$ aus Gln. (4.7) ist, daß bereits vor dem Abbremsen ein guter Schätzwert $\hat{X}_{10} = \hat{V}_{q0}$ vorliegt. Da im ungebremsten Fall die Schräglaufsteifigkeit nicht aus den Gln. (2.22) - (2.25) berechnet werden können, werden die zunächst als konstant angenommen.

Setzt man die Schräglaufsteifigkeiten der Räder einer Achse als gleich voraus und bezeichnet die resultierende Schräglaufsteifigkeit der Vorderachse mit $C_{V0}$ und die resultierende Schräglaufsteifigkeit der Hinterachse mit $C_{H0}$, so lauten die Differentialgleichung für das ungebremste Fahrzeug entsprechend den Gln. (4.3) und (4.4):

$$\dot{V}_q = a_{11}\, V_q + a_{12}\, \dot{\psi} + u_1 \tag{4.10}$$

$$\ddot{\psi} = a_{21}\, V_q + a_{22}\, \dot{\psi} + u_2$$

mit

$$a_{11} = -\frac{(C_{V0}\cos\delta + C_{H0})}{m\, V_L} \quad;\quad a_{12} = \frac{C_{V0}l_1\cos\delta - C_{H0}l_2\, m V_L^2}{m\, V_L}$$

$$a_{21} = \frac{C_{V0}l_1\cos\delta - C_{H0}l_2}{\theta_H\, V_L} \quad;\quad a_{22} = -\frac{(C_{V0}l_1^2\cos\delta + C_{H0}l_2^2)}{\theta_H\, V_L}$$

$$u_1 = \frac{C_{V0}\cos\delta\, \delta}{m} \quad;\quad u_2 = -\frac{C_{V0}l_1\cos\delta\, \delta}{\theta_H}$$

Für die Seitenkräfte an der Vorder- und Hinterachse gilt dann:

$F_{SV} = C_{RV}\, \alpha_V$
$F_{SH} = C_{RH}\, \alpha_H$

mit

$$C_{RV} = 2\left[(C_{RL} - C_{RN})\frac{\alpha_o}{\alpha_V} + C_{RN}\right]$$

$$C_{RH} = 2\left[(C_{RL} - C_{RN})\frac{\alpha_o}{\alpha_H} + C_{RN}\right]$$

$$\frac{\alpha_o}{\alpha_V} \overset{!}{=} 1 \text{ für } |\alpha_V| < |\alpha_o| \quad;\quad \frac{\alpha_o}{\alpha_H} \overset{!}{=} 1 \text{ für } |\alpha_H| < |\alpha_c|$$

Die Steigung $C_{RN}$ wird über ein PD-Regelgesetz bestimmt:

$$C_{RN} = C_{RL} - K_p\, |\dot{\psi}_S - \dot{\psi}_n| - K_D\, |\ddot{\psi}_S - \ddot{\psi}_n|$$

mit
$\dot{\phi}_n$     : gemessene Gierwinkelgeschwindigkeit
$\dot{\phi}_S$ :     simulierte Gierwinkelgeschwindigkeit

$K_P$, $K_D$:      Verstärkungsfaktoren > 0

Die resultierenden Schräglaufsteifigkeiten $C_V$, $C_H$ werden aus $C_{RV}$, $C_{RH}$ mittels eines einfachen Radaufhängungsmodells bestimmt.

Fig. 11 zeigt die Struktur der "Schräglaufsteifigkeitsregelung".

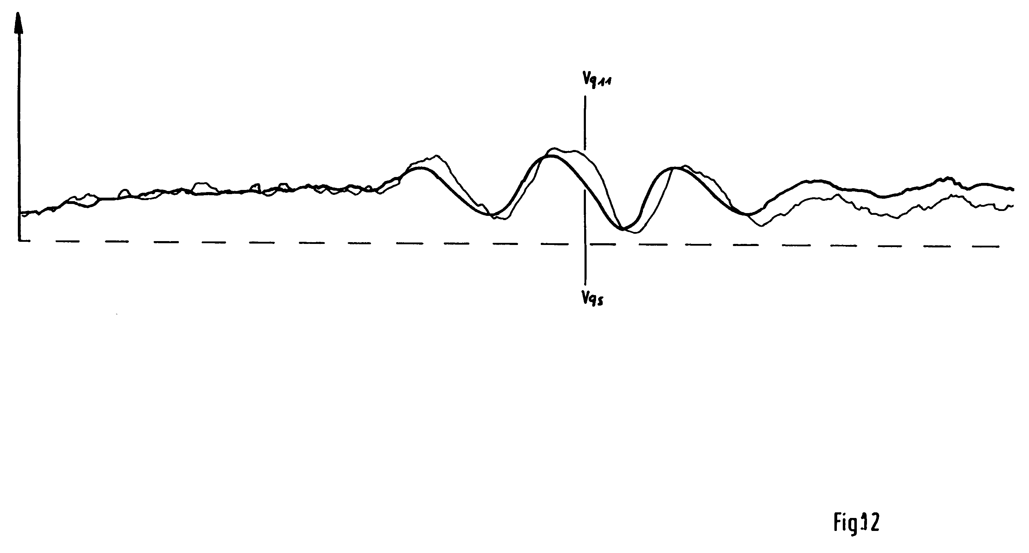

Fig. 12 zeigt einen Vergleich zwischen gemessener und simulierter Fahrzeugquergeschwindigkeit unter Verwendung des "Schräglaufsteifigkeits-Reglers".

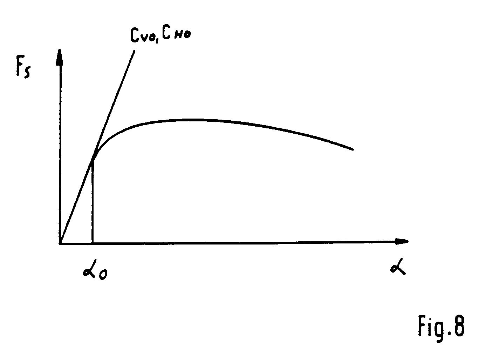

Die Gln. (4.10) beschreiben das Fahrzeugverhalten jedoch nur dann ausreichend genau, falls sich die Schräglaufwinkel im linearen Teil der Seitenkraft-Schräglaufkurve bewegen, d.h. falls $\alpha \leq \alpha_o$ gilt (siehe Fig. 8).

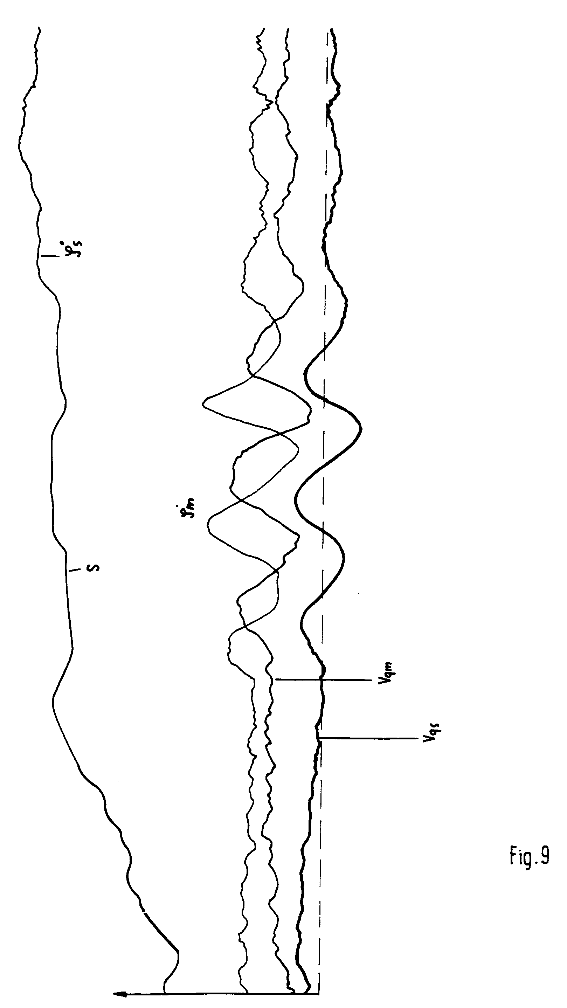

Befinden sich die Schräglaufwinkel im nichtlinearen Bereich der Seitenkraft-Schräglaufkurve ($\alpha > \alpha_o$), so treten gravierende Unterschiede zwischen tatsächlicher und simulierter Fahrzeuggeschwindigkeit und zwischen tatsächlicher und simulierter Gierwinkelgeschwindigketi auf (siehe Fig. 9).

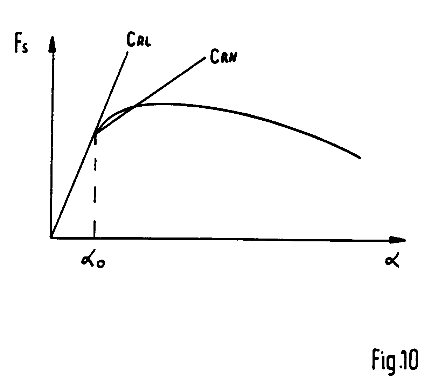

Da die Giergeschwindigkeit gemessen wird, kann die Differenz zwischen gemessener und simulierter Giergeschwindigkeit als Indikator für den Übergang vom linearen in den nichtlinearen Bereich der Seitenkraft-Schräglaufkurve herangezogen werden. Sobald das Verlassen des linearen Bereichs der Seitenkraft-Schräglaufkurve erkannt wird, wird der Zusammenhang zwischen Seitenkraft und Schräglaufwinkel näherungsweise durch eine Gerade mit der Steigung $C_{RN}$ beschrieben (siehe Fig. 10).

Man kann nun auch noch die Reifenaufstandskräfte ermitteln.

Die Reifenaufstandskräfte lassen sich aus den Gln. (1.3), (1.5), (1.6) und (1.8) gewinnen. Es gilt:

$$N_1 = \frac{a + b + c}{4dl_R} \tag{5.1}$$

$$N_2 = \frac{F_{BV}\cos\delta\ h + F_{BH}\ h + F_{SV}\sin\delta\ h + mgl_2}{l_R} - N_1 \tag{5.2}$$

$$N_3 = \frac{mg}{2} - N_2 \tag{5.3}$$

$$N_4 = \frac{mg}{2} - N_1 \tag{5.4}$$

mit

$a = F_{BV} (2\cos\delta\ h\ d - \sin\delta\ l_R\ h)$
$b = F_{SV} (2\sin\delta\ h\ d + \cos\delta\ l_R\ h)$
$c = F_{BH}\ 2\ h\ d + F_{SH}\ l_R\ h + 2\ mg\ l_2\ d$

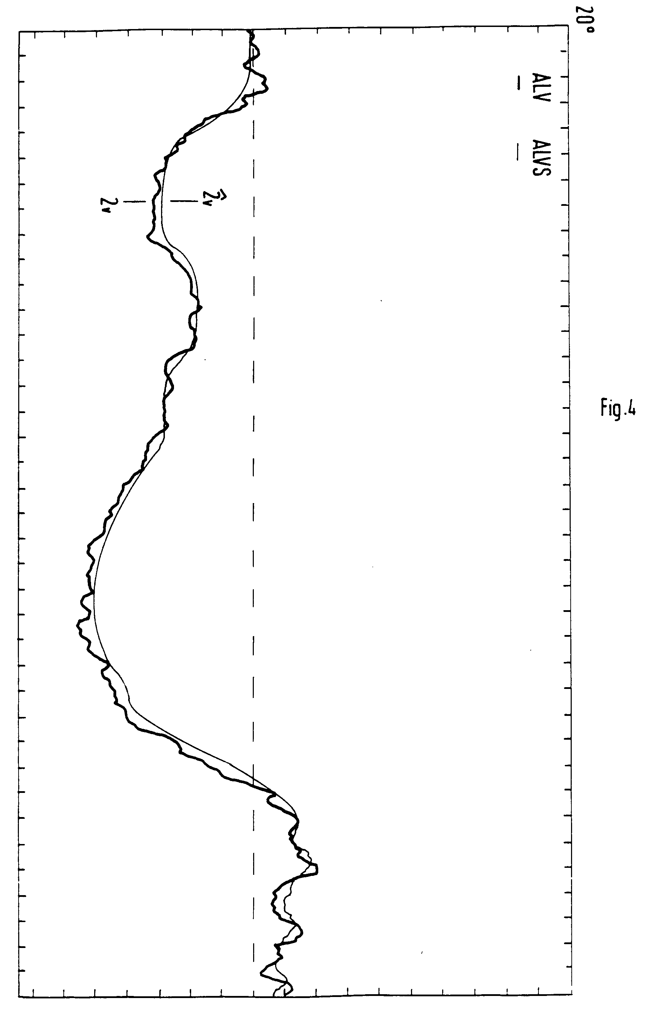

Die Figuren 4 bis 7 zeigen Vergleiche zwischen gemessenen ($\alpha_V$) und geschätzten ($\alpha_V$) Schräglaufwinkeln bei verschiedenen Fahrmanövern auf unterschiedlichen Belägen bei einem bestimmten Fahrzeug. Es zeigen im einzelnen:

Fig. 4 -      Fahrt auf Eis + Kurve

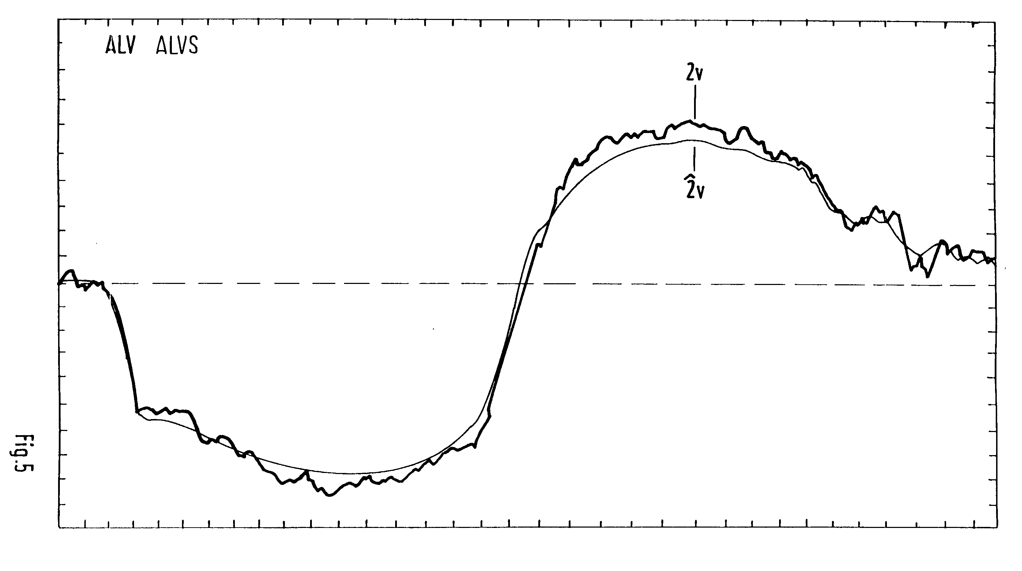

Fig. 5 -      Fahrt auf Eis + Ausweichmanöver

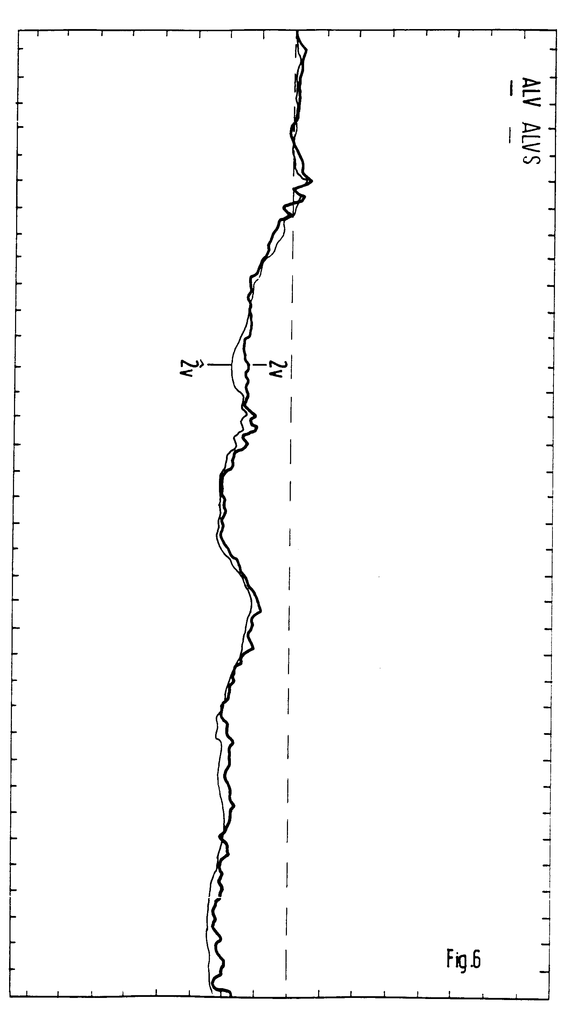

Fig. 6 -      Fahrt auf $\mu$-Split

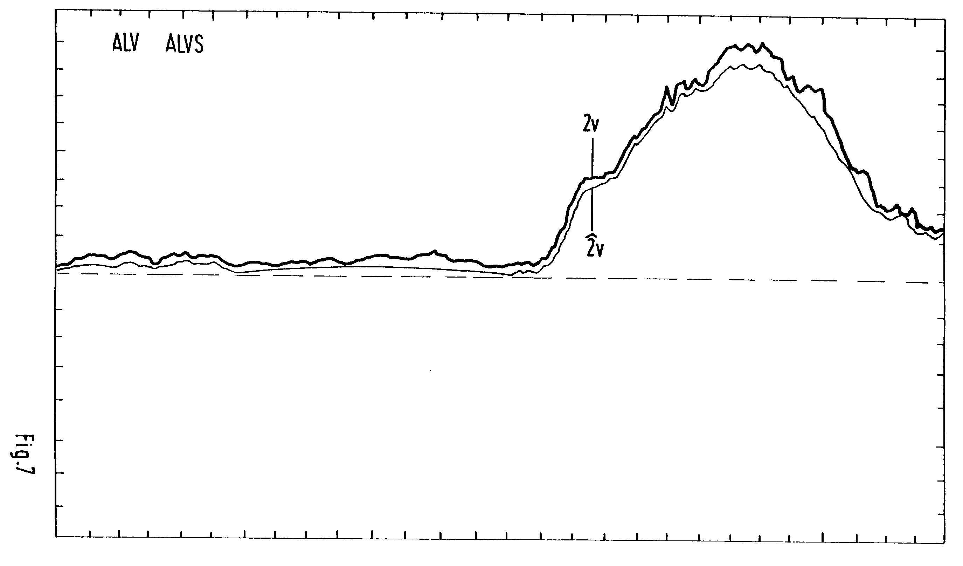

Fig. 7 -      Fahrt auf Asphalt + Kurve

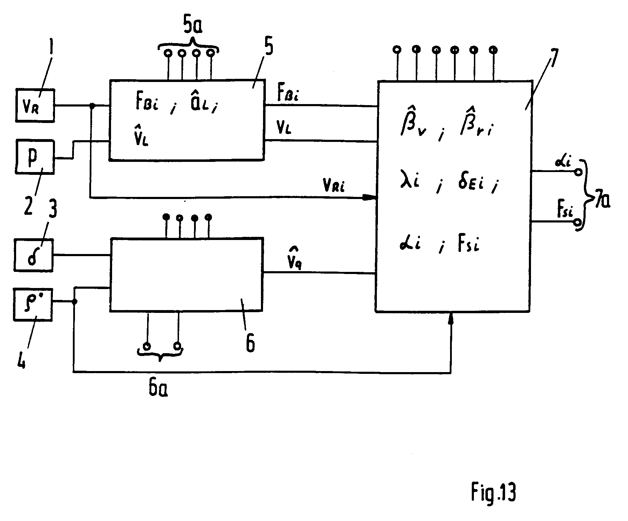

Anhand der Fig. 13 der Zeichnung soll ein Ausführungsbeispiel der Erfindung erläutert werden. Es sind Sensoren 1 für die Radgeschwindigkeiten $V_{Ri}$, 2 für den Radzylinderdruck $P_i$ oder den Hauptbremszylinderdruck $P_{HBZ}$, 3 für den Lenkwinkel $\delta$ und 4 für die Giergeschwindigkeit $\dot{\phi}$ vorgesehen.

In einem Block 5 werden mit Hilfe der Meßgrößen $V_{Ri}$ und $P_i$ bzw. $P_{HB2}$ die Bremskräfte $F_{Bi}$ nach der Beziehung 3.3 und die Fahrzeuglängsgeschwindigkeit $\hat{V}_L$ z.B. mittels der Beziehung 3.4 gewonnen. Die Klemmen 5a sollen das Eingeben von für die Ermittlung der Größen benötigte Konstanten andeuten.

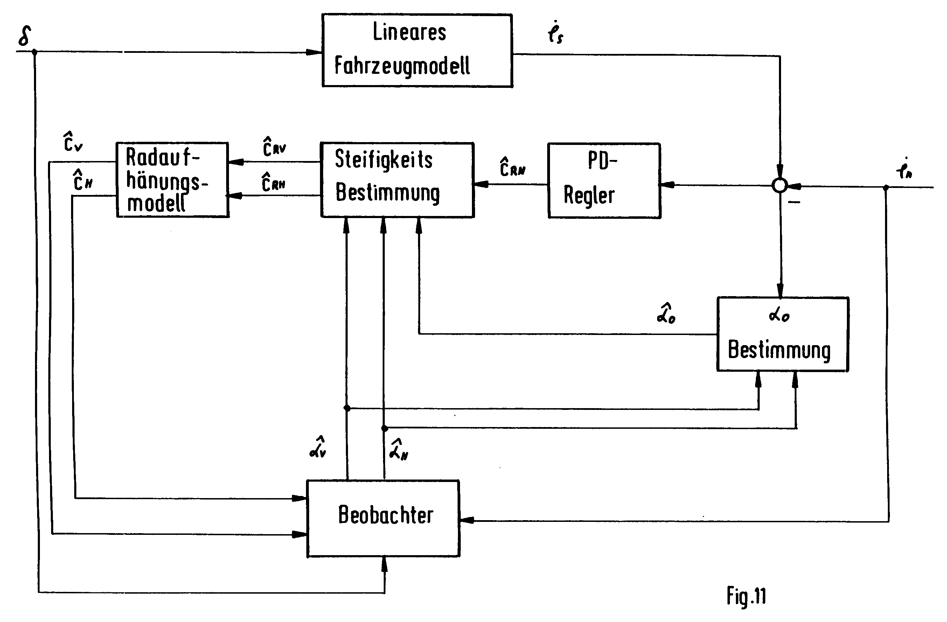

In einem weiteren Block 6 wird mittels der Meßgrößen $\delta$ und $\dot{\phi}$ und eines dort enthaltenen Kalman-Filters die Schätzgröße $\hat{V}_q$ (Beziehung 4.7) ermittelt. Die Klemmen 6a sollen andeuten, daß der Regler der Fig. 11 hierüber die variablen Größen $\widehat{C}_V$ und $\widehat{C}_H$ zuführt.

Die Ausgangsgrößen der Blöcke 5 und 6 und die Radgeschwindigkeiten $V_{Ri}$ werden einem Block 7 zugeführt, der gemäß den Beziehungen 2.26 die Schwimmwinkel $\beta_V$ und $\beta_H$, gemäß 2.27 und 2.28 due Radschlüpfe $\lambda_i$, gemäß den Beziehungen 2.10 bis 2.13 die elastischen Lenkwinkel $\delta_{Ei}$ und schließlich die Schräglaufwinkel $\alpha_i$ und/oder die Seitenführungskräfte $F_{Si}$ ermittelt und an Klemmen 7a ausgibt. Es wird hier auch auf die Fig. 6 plus zugehöriger Beschreibung der Patentanmeldung P 40 30 704.2 (Anlage I) hingewiesen.

**Patentansprüche**

1. Verfahren zum Bestimmen von Schräglaufwinkel $\alpha_i$ und/oder von Seitenführungskräften $F_{si}$ eines gebremsten Fahrzeuges unter Verwendung der Größen Giergeschwindigkeit $\dot{\phi}$, Lenkwinkel $\delta$ und Fahrzeuggeschwindigkeit $V_L$, dadurch gekennzeichnet, daß die Schräglaufwinkel $\alpha_i$ und/oder die Seitenführungskräfte $F_{si}$ unter Nutzung dieser Größen und zusätzlich dem Hauptbremszylinderdruck $P_{HBZ}$ oder der Radbremsdrücke $P_i$ mit Hilfe eines vereinfachten Fahrzeugmodells ermittelt werden.

2. Verfahren nach Anspruch 1, dadurch gekennzeichnet, daß zusätzlich noch die Reifenaufstandskräfte $N_i$ ermittelt werden.

**Claims**

1. Method for determining slip angles $\alpha_i$ and/orcornering forces $F_{si}$ of a braked vehicle by using the variables of yaw rate $\dot{\phi}$, steering angle $\delta$ and vehicle speed $V_L$, characterized in that the slip angles $\alpha_i$ and/or the cornering forces $F_{si}$ are determined using these variables and in addition to the main brake cylinder pressure $P_{HBZ}$ or the wheel brake pressures [sic] $P_i$ with the aid of a simplified vehicle model.

2. Method according to Claim 1, characterised in that the tyre normal forces $N_i$ are also determined in addition.

**Revendications**

1. Procédé pour déterminer l'angle de dérive $\alpha_i$ et/ou les forces de guidage latéral $F_{si}$ d'un véhicule freiné en utilisant les grandeurs : vitesse de giration $\dot{\phi}$, angle de direction $\delta$ et vitesse du véhicule $V_L$, caractérisé en ce qu'on détermine les angles de dérive $\alpha_i$ et/ou les forces de guidage latéral $F_{si}$ en utilisant ces grandeurs et en plus de la pression du maître-cylindre $P_{HBZ}$ ou de la pression de frein de roue $P_i$ que l'on détermine à l'aide d'un modèle de véhicule simplifié.

2. Procédé selon la revendication 1, caractérisé en ce qu'en plus, on détermine les forces d'appui de roue $N_i$.

Fig.1a

Fig.1b

Lenkachse

Fig.2a

Fig.2b

Fig.3

Fig.4

Fig.5

EP 0 503 026 B1

ALV  ALVS

2v

2̂v

Fig.6

17

Fig.7

ALV    ALVS

2v
$\hat{2}$v

Fig.8

Fig.9

Fig.10

Lineares Fahrzeugmodell

PD-Regler

Steifigkeits Bestimmung

Radaufhänungsmodell

Bestimmung

Beobachter

Fig.11

Fig.12

EP 0 503 026 B1

Fig.13